# EUROPEAN PATENT APPLICATION

(11) **EP 1 775 714 A1**
(43) Date of publication of application: **18.04.2007**
(21) Application number: 05766980.6
(22) Date of filing: 01.08.2005
(51) Int. Cl.: G10K 11/16, B32B 5/26, B60R 13/08, E04B 1/90

(54) **ACOUSTIC INSULATION**

(30) Priority: 04.08.2004 JP 2004227832
(71) Applicant: Toyo Boseki Kabushiki Kaisha, Osaka-shi, Osaka 530-8230 (JP)
(72) Inventor: TANAKA, Shigeki, TOYO BOSEKI KABUSHIKI KAISHA, Tokyo (JP); SAKAMOTO, Hiroyuki, TOYO BOSEKI KABUSHIKI KAISHA, Ohtsu-shi, Shiga (JP); SAKAGUCHI, Hiroyasu, TOYO BOSEKI KABUSHIKI KAISHA, Osaka-shi, Osaka (JP)
(74) Representative: Perrey, Ralf
(86) International application number: PCT/JP2005/014018
(87) International publication number: WO 2006/013810

(57) **Abstract**

[PROBLEMS]

Provided is a sound absorbing material having a light weight, a smaller thickness, and outstanding sound absorbing property and heat insulating property.

[MEANS FOR SOLVING PROBLEMS]

Used is a sound absorbing and heat insulating material having at least one peak of normal incident sound absorption coefficient in a range of 315 to 5000 Hz, a peak absorption coefficient not less than 80%, and a thickness of 5 to 30 mm. For example, a layer obtained by laminating a porous film layer B including a resin having a melting point not less than 120 degrees C to a nonwoven fabric A having a fiber with not less than 1 micron and not more than 25 microns of a fiber diameter, as a principal component, and a mass per unit area of 10 to 70 g/m²; and a staple fiber nonwoven fabric C having a fiber diameter of 7 to 50 microns, a mass per unit area of 50 to 2000 g/m², and a thickness of 4 to 30 mm; are integrated by compounding by a plurality of through-passing fibers, and thereby enabling set of a peak of a sound absorption coefficient.

## Description

### TECHNICAL FIELD

The present invention relates to a sound absorbing material having a light weight, a smaller thickness, and outstanding sound absorbing property and heat insulating property. Specifically, the present invention relates to a sound absorbing material excellent in sound absorption property in 500 Hz to 4000 Hz. Furthermore, the present invention relates to a sound absorbing and heat insulating material exhibiting especially excellent sound absorption property and heat insulating property when used as interior materials, such as ceilings, floors, and door trims of vehicles of automobiles.

### BACKGROUND ART

Conventionally, staple fiber nonwoven fabrics have been widely used as sound absorbing materials in use for automobiles or construction field etc. In order to secure higher sound absorbing performance, there have been carried out investigations for measures of improvement of passage resistance of air using a smaller fiber diameter, and larger mass per unit area etc. And when especially higher sound absorbing performance is needed, generally used are thicker and heavier staple fiber nonwoven fabrics using fibers with comparatively finer fiber diameter of about 15 microns and having a mass per unit area of 500 to 5000 g/cm² (for example, refer to Non-patent document 1).

On the other hand, although nonwoven fabrics including superfine fibers have outstanding properties, such as sound absorption property, filtering property, shielding property and have been used for many usages, they have problems, such as low strength or shape stability. Therefore, they have been used in a state of laminated compounded material with other nonwoven fabrics in order to improve the problems. In this case, as methods of integration by lamination of the nonwoven fabric, resins or thermal adhesive fibers are used as a binder in spraying or transferring method etc. (for example, refer to Patent document 1). However, the methods need heat treatment for drying, or for melting and adhesion of the resins, and therefore, these methods are not very preferable methods in consideration of problems of environmental pollution caused by exhaust gas, or of energy consumption. These methods also have problems, such as deterioration of the sound absorbing property caused by film formation of the binder resin in an interface between the nonwoven fabrics.

As methods of integration by lamination of a superfine fiber nonwoven fabric and a filament nonwoven fabric, there is a method, generally known as an S/M/S method, wherein a melt-blown nonwoven fabric of a superfine fiber is laminated between spun bond nonwoven fabrics, and, subsequently is joined by heat embossing method. However, these nonwoven fabrics have poor feeling of volume, and coarse touch, and have a problem of consequential limitation of use. In addition, there is also commercialized a nonwoven fabric, what is called as "co-form" obtained by compounding by blowing of a staple fiber of 20 to 30 microns into a melt-blown nonwoven fabric, and this product exhibits outstanding sound absorbing performance (for example, refer to Patent document 2). However, sound absorbing materials to be built into automobile interior materials, electric products, etc. are often subjected to solid molding processes, and in molding accompanied by deep drawing the materials have problems that may not allow the sound absorbing materials to follow a larger deformation in an area to be drawn. Use of the superfine fiber for improving sound absorbing performance makes a specific surface area increase, and may cause a problem of easier burning. Especially when the superfine fiber is made by a melt blowing method, a polypropylene is generally used, and the material further cause a problem of easy burning. In uses in possible contact with heating elements, such as a motor, this material has a fault of difficulty in use in consideration of safety.

Conventional sound absorbing materials have a problem of drop of sound absorbing performance in a higher frequency region when a higher absorption coefficient is realized in a lower frequency region with larger thickness of a nonwoven fabric. As other measures, there is found a fact that attachment of a sheet with a shape of a film on a surface of a porous sound absorbing material can improve sound absorbing performance in a lower frequency region of 500 to 1000 Hz, but this measure causes a problem that the sound absorbing performance in a higher frequency region not less than 2000 Hz is low.

As miniaturization and weight saving progress especially in an automobile use in recent years, it is more difficult to adopt techniques for sound insulation utilizing weight as a function in use of conventional sound absorbing materials with a larger mass per unit area. And therefore, the market intensely needs light weight nonwoven fabrics having higher sound absorbing performance also in a lower frequency region.
Under such a situation, light weight and thin sound absorbing materials having high sound absorbing performance also in a lower frequency region, and excellent shape stability are not currently yet obtained,
Non-patent document 1: Building materials and its construction method series W-5 "structural noise absorbing material" written by Masaru Koyasu, issued by Gijutsu Shoin
Patent document 1: Japanese Patent Laid-open No. 06-4075 official report
Patent document 2: Japanese Patent Laid-open No. 09-221334 official report

### DESCRIPTION OF THE INVENTION

### SUMMARY OF THE INVENTION

The present invention aims at providing a thinner and lighter weight sound absorbing material exhibiting higher sound absorbing performance in a lower frequency region, and having excellent shape stability at a lower price. Automobile related business needs lighter weight sound absorbing materials realizing improvement in fuel consumption and in comfortableness. The present invention specifically also aims at providing a sound absorbing material in response to the needs. The present invention aims at providing a sound absorbing and heat insulating material having outstanding thermal efficiency, in usages that need heat insulating properties for air-conditioner etc.

### MEANS FOR SOLVING PROBLEMS

The present invention adopts following measures, in order to solve the problems. That is, a first aspect of the present invention provides a sound absorbing and heat insulating material having at least one peak of normal incident sound absorption coefficient in a range of 315 to 5000 Hz, a peak absorption coefficient not less than 80%, and a thickness of 5 to 30 mm.

A second aspect of the present invention provides a sound absorbing and heat insulating material wherein a layer obtained by laminating a porous film layer B including a resin having a melting point not less than 120 degrees C to a nonwoven fabric A having a fiber with not less than 1 micron and not more than 25 microns of a fiber diameter, as a principal component, and a mass per unit area of 10 to 70 g/m²; and a staple fiber nonwoven fabric C having a fiber diameter of 7 to 50 microns, a mass per unit area of 50 to 2000 g/m², and a thickness of 4 to 30 mm; are integrated by compounding by a plurality of through-passing fibers.

A third aspect of the present invention provides the sound absorbing and heat insulating material according to the first or the second aspect, wherein a Frazier gas permeability is between 0.05 and 100cm³/cm².second.

A fourth aspect of the present invention provides the sound absorbing and heat insulating material according to any one of the second and the third aspect, wherein the nonwoven fabric A and the film layer B are compounded by an extrusion laminating method, and further integrated by compounding with the staple fiber nonwoven fabric C layer by a needle punch method.

A fifth aspect of the present invention provides the sound absorbing and heat insulating material according to the fourth aspect, wherein 5 to 200 numbers/cm² of loops having a height not less than 0.3 mm exist at least on one side of the film layer B by compounding using the needle punch method.

A sixth aspect of the present invention provides the sound absorbing and heat insulating material according to the second aspect, wherein the film layer B is constituted by a copolymer including polypropylene or any one of polypropylene, polyethylene, and polyoctene, and the film layer B has a thickness of 10 to 50 microns.

A seventh aspect of the present invention provides the sound absorbing and heat insulating material according to any one of the second to the sixth aspects, wherein aluminum is vapor-deposited on at least one side of the film layer.

### EFFECT OF THE INVENTION

The sound absorbing and heat insulating material obtained by the present invention can provide a thin and light weight sound absorbing material, at low costs, having high sound absorbing performance in a lower frequency region, and excellent shape stability. Automobile related business need lighter weight sound absorbing materials for realizing improvement in fuel consumption and in comfortableness. The present invention can provide a sound absorbing material in response to the needs. The present invention can provide a sound absorbing and heat insulating material having outstanding thermal efficiency, in usages that need heat insulating properties for air-conditioner etc.

### BRIEF DESCRIPTION OF THE DRAWINGS

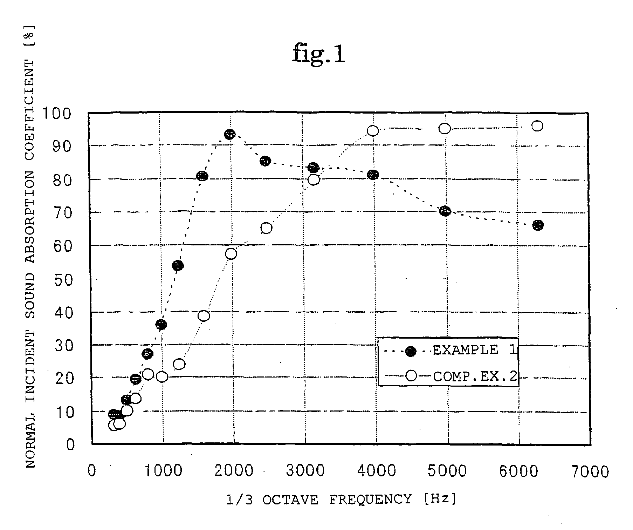

Figure 1 is a graph illustrating the sound absorption property of a sound absorbing material according to the present invention.

### BEST MODE FOR CARRYING-OUT OF THE INVENTION

The present invention will, hereinafter, be described in detail.
Although the sound absorbing and heat insulating material used in the present invention has a very small thickness of 5 to 30 mm, it has outstanding sound absorbing performance.
The sound absorbing and heat insulating material according to the present invention preferably has at least one peak in a range of 315 to 5000 Hz, in a graph having 1 / 3 octave frequency in an abscissa, and an absorption coefficient in an ordinate, and preferably has a peak absorption coefficient not less than 80%. Different sound absorption properties may be needed according to a mode wherein the sound absorbing and heat insulating material is used, and in automobile usages, the peak of the normal incident sound absorption coefficient more preferably exists in a range of 1000 to 4000 Hz, and especially preferably in a range 1600 to 3150 Hz. The peak position of the characteristic frequency varies based on a structure of the sound absorbing and heat insulating material, thickness, gas permeability, etc. The peak absorption coefficient is preferably at least 70%, and especially preferably not less than 90%. Furthermore, it is especially preferred that the absorption coefficients at 1000 Hz, 2000 Hz, and 4000 Hz are not less than 20, 50, or 60%, respectively, from a viewpoint of giving less trouble in conversations in automobiles. Although larger thicknesses and weights generally allow establish of higher sound absorbing performances in sound absorbing materials, installation of the sound absorbing material in a limited space in automobiles gives restrictions to a thickness thereof. Furthermore, sound absorbing materials having lighter weight is needed by a relation with fuel consumption of the automobiles, and therefore, suitable adjustment of a structure thereof is needed.

The present inventors found out that control of structures, thicknesses, etc. of nonwoven fabrics can control the peak position of the absorption coefficient, and can maximize the sound absorption efficiency in a frequency region needed. In the sound absorbing and heat insulating material of the present invention, it is preferred that at least a nonwoven fabric and a porous film layer are integrated by compounding. It is because the compounding may give better sound absorbing performance. In order to control gas permeability etc., compounding of a nonwoven fabric layer including a superfine fiber is also one of desirable embodiments. It is also preferred to compound with clothes, textiles, etc. depending on types of usages. Furthermore, designed surface nonwoven fabrics having colors and patterns may also be attached to the outside of this composite nonwoven fabric, allowing suitable use as acoustic insulations for vehicles interior materials or building materials.

In the present invention, it is preferred that a layer obtained by laminating a film layer B including a resin having a melting point not less than 120 degrees C to a nonwoven fabric A having a fiber with not less than 1 micron and not more than 25 microns of a fiber diameter, as a principal component, and a mass per unit area of 20 to 200 g/m²; and a staple fiber nonwoven fabric C having a fiber diameter of 7 to 50 microns, a mass per unit area of 50 to 2000 g/m², and a thickness of 4 to 30 mm; are integrated by compounding by a plurality of through-passing fibers.

The nonwoven fabric A is used as a reinforcement layer of a film layer or for gas permeability control, and the finer fibers are included, the more sound absorbing performance advantageously improves. Whole of the nonwoven fabric may include only superfine fibers, and excessively small contents do not disadvantageously allow the effect by the superfine fiber characteristic to be exhibited, and moreover deteriorate reinforcing effect. Preferably the fiber diameter is not more than 25 microns, especially preferably not more than 3 to 18 microns, and most preferably approximately 5 to 16 microns. The manufacturing method of the fiber is not in particular limited, and filaments and staple fibers may be used. Nonwoven fabrics obtained by a melt blowing method and a spun bond method that enable random arrangement of fibers and cheaper production costs is especially preferred. Since melt-blown nonwoven fabrics have lower strength, it is also preferred to use nonwoven fabrics obtained by bonding with nonwoven fabrics for reinforcement, such as spun bond nonwoven fabrics, or to use simultaneous lamination of three or more layers of nonwoven fabrics in a lamination process. In this case, it is preferred for the spun bond nonwoven fabric having outstanding wear resistance to be disposed so that it may be arranged on a surface side in use. Laminated nonwoven fabrics obtained by emboss processing of a melt-blown nonwoven fabric and a spun bond nonwoven fabric together are marketed under names of S/M/S, S/M, etc., and these may preferably be used (S represents a spun bond nonwoven fabric and M represents a melt blown nonwoven fabric.)

The nonwoven fabric A preferably has a mass per unit area of 20 to 200 g/m² Mass per unit areas smaller than 20 g/m² makes difficult exhibition of desired reinforcing effects or the gas permeability control effects. Mass per unit areas more than 200 g/m² makes difficult provision of sound absorbing materials with lighter weight as an object of the present invention. In this case, application of the needle punch method as a suitable compounding method of the nonwoven fabric A layer and the film layer B and the staple fiber nonwoven fabric C layer gives many needle breaks, causing frequent problems. Preferably, a mass per unit area is 20 to 50 g/m². In the case of the compounding by the needle punch method, a mass per unit area less than 20 g/m² gives a weak entanglement between fibers, and disadvantageously tends to cause peeling.

The film layer B is preferably made from a resin having a melting point not less than 120 degrees C. Lower melting points of the resin not only limit applicable usages thereof, but friction in needle penetration also produces heat in compounding by the needle punch method, and then excessive hooking of the molten resin to a barb portion unpreferably induces needle breakage. As resins having a melting point not less than 120 degrees C, polypropylene homopolymer may generally be mentioned. Copolymers including any one of polypropylene, polyethylene, and polyoctene may especially preferably be mentioned as resins having moderate softness, and allow avoidance of unusual noise generation at the time of film deformation. The thickness is preferably 10 to 50 microns, and especially preferably 15 to 30 microns. Films having a thickness less than 15 microns often have a problem in a mechanical strength, and a thickness not less than 30 microns tends to generate unusual noise. In the case of compounding by the needle punch method, a film having a thickness not less than 30 microns tends to induce a needle breakage, requiring special care. Use of the needle punch method can perforate a film, allowing resultant control of gas permeability.

Although there may be a certain relationship between the gas permeability and the peak frequency of the sound absorbing performance, the relationship is not yet clearly understood. A film layer thickness more than 30 microns unpreferably makes adjustment of a desired peak frequency difficult. In lamination of the nonwoven fabric layer A and the film layer B, adhesive methods, heat laminating methods, etc. are usable, and the methods are not in particular limited. A method of extrusion lamination of the resin that forms the film layer B onto the nonwoven fabric layer A is especially preferable from viewpoints of adhesive strengths, processing costs, etc. In the case where heat insulating property is important factor, it is preferred to use a film having vapor-deposited aluminum thereon.

In the sound absorbing and heat insulating material of the present invention, preferably 5 to 200 numbers/cm² of loops having a height not less than 0.3 mm obtained by a needle punch method etc. exist on at least one side of the film layer B. The existence on the surface of the sound absorbing and heat insulating material of this film layer may in some case generate rubbing noise with contact to other materials. Introduction of the fiber loop on the surface can solve this problem. The number of fiber loops smaller than 5 numbers/cm² disadvantageously reduces this improvement effect. The number of fiber loops more than 200 numbers/cm² unpreferably deteriorates the mechanical strength of the film layer.

From a viewpoint of the problem of VOC, or recycling efficiency, polyesters or polyolefins are preferable as main components constituting the staple fiber nonwoven fabric C, but the components are not limited to them. In order to improve shape stability, inclusion of approximately 10 to 80% of thermally fusible fibers, or a three-dimensionally crimped fiber may be mentioned as one of preferable embodiments. It is preferred that a fiber diameter is 7 to 50 microns, and a mass per unit area is 50 to 2000 g/m², and thickness 4 to 30 mm. Investigations of the present inventors illustrate that the fiber diameter is preferably 7 to 50 microns, and especially preferably 7 to 20 microns. Although the fiber diameter smaller than 7 microns does not directly cause a large problem, it is not so preferred in consideration of productivity, such as spinnability from a carding machine. A fiber diameter greatly smaller than 7 microns reduces lamination effect by the present invention, and may cause another problem such as easy formation of fluffs from the nonwoven fabric. On the other hand, a fiber diameter thicker than 50 microns lowers contribution to sound absorbing performance, being not so preferred. The length of the staple fiber as component is preferably not less than 38 mm and not more than 150 mm, and especially preferably it is in a range 50 to 150 mm. Investigations of the present inventors illustrate that a larger fiber length gives more excellent sound absorption coefficient. However, excessively large fiber length disadvantageously worsens the spinnability from a carding machine.

The staple fiber may be made of single component, and may be a composite fiber including two or more kinds of components. Blending of a coarser fiber with a weight fraction of approximately not more than 30% in order to adjust hardness of the nonwoven fabric does not largely change the characteristics. Excessive weight fraction of a coarser fiber disadvantageously tends to cause problems, such as excessively large hardness, for a nonwoven fabric touch. It is also preferred to use the thermally fusible fibers with a different melting point, from a viewpoint of improving dimensional stability. It is preferred that a pack density based on the weight of the staple fiber nonwoven fabric is between 0.005 to 0.3 g/cm³ from a viewpoint of bulkiness. Excessively smaller pack density disadvantageously worsens shape stability. There is shown a tendency for a larger pack density than 0. 3 g/cm³ to worsen sound absorbing property, failing to satisfy the object of the present invention. Recovered materials as recycling nonwoven fabrics etc. may also be used from a viewpoint of environmental problems. Although the material may be of natural fibers or of synthetic fibers, contact of water should be avoided when using hydrophilic fibers. This is because entry of water to the vacancy of the nonwoven fabric may deteriorate sound absorbing performance.

The sound absorbing and heat insulating material of the present invention preferably has a Frazier gas permeability between 0.05 and 100 cm³/cm².second, more preferably between 1 and 70 cm³/cm².second, and especially preferably between 5 and 50 cm³/cm².second. The Frazier gas permeability of the sound absorbing and heat insulating material of the present invention smaller than 0.05 cm³/c m². second causes reflection of sounds on the surface of the sound absorbing and heat insulating material, and thus disadvantageously deteriorates sound absorbing performance. Excessively large Frazier gas permeability makes difficult setting of existence of at least one peak of the normal incident sound absorption coefficient in a range of 315 to 5000 Hz.

It is preferred that the sound absorbing and heat insulating material of the present invention is a staple fiber nonwoven fabric having a mass per unit area of 80 to 2000 g/m² A mass per unit area smaller than 80 g/m² deteriorates sound absorption effect, and is not so preferred in the viewpoints of bulkiness of the nonwoven fabric. On the other hand, a mass per unit area larger than 2000 g/m² increases thickness, and disadvantageously needs a larger space, leading to excessive weight. It is preferred that the thickness of this nonwoven fabric is between 5 to 30 mm. The thickness smaller than 5 mm unpreferably deteriorates sound absorbing performance and insulation efficiency. The larger thickness can provide the higher sound absorption coefficient in a lower frequency region, but a thickness exceeding 30 mm disadvantageously promotes bulkiness. It is preferred that the thickness is 5 to 20 mm from a viewpoint of handling or cost performance.

The integration by compounding method of the nonwoven fabric is not in particular limited, use of adhesives, adhesive powder, etc. are also possible, and integration by a needle punching method or a water stream intermingling method is preferred. The needle punching method is generally carried into effect as a nonwoven fabric processing method, and details of the method are described in "The foundation of a nonwoven fabric, application", etc. edited by nonwoven fabric study group of The Textile Machinery Society of Japan.

Although it is considered that the compounding method of nonwoven fabrics using this needle punching method is publicly known, products by the method cannot be found in a market in the range of understanding of the present inventors. It is probably because that compounding of nonwoven fabrics with superfine fibers and uniform structure and fibers including a comparatively coarse bulky staple fiber by a needle punch machine will perforate the superfine fiber nonwoven fabric to deteriorate sound absorbing performance, filtering performance, etc., thereby blocking exhibition of superfine fiber physical property. In needle punch processing, a needle finer than a needle count of 38 is preferably used, and especially preferably a needle count of 40 to 42 is used. A needle enters from the staple fiber nonwoven fabric side, and preferably forms loops of the staple fibers on an outside of the nonwoven fabric including the superfine fiber. In a nonwoven fabric including the superfine fiber, the fiber is hooked by other materials, or cut thereby to easily form fluffs. However, it has become clear that loops of the staple fiber prevent surface fluffing of the nonwoven fabric including the superfine fiber, and form a cushioning layer, thereby being useful for prevention of destruction by relieving an external force applied to the superfine fiber nonwoven fabric layer. In addition, it has also been cleared that adhesion of this loop, and a third material as a lamination partner can prevent destruction of the nonwoven fabric including the superfine fiber with external force applied thereto, such as bending and tension, in the case of lamination with another nonwoven fabric having an elongation percentage higher than 30%, a film, etc.

In order to form suitable size of loops, it is preferred that the depth of the needle in needle punching is not more than 15 mm. With the depth more than the above mentioned value, impact in penetration of a needle and a staple fiber into a superfine fiber nonwoven fabric disadvantageously destroys the nonwoven fabric, or often excessively enlarges pinholes after penetration. Needle depth is dependent on the position of the barb of the needle, and in order to increase the intermingling in the nonwoven fabric and to prevent peeling, it is preferably not less than 5 mm. It is preferred that penetration density is 5 to 200 times/cm². A penetration density smaller than 30 times/cm² tends to cause a problem of peeling of the nonwoven fabric. A penetration density larger than 200 times/cm² disadvantageously gives an excessive large opening gross area, leading to easy tear and destruction of the nonwoven fabric including the superfine fiber. Either of the surface of the laminated product of the nonwoven fabric A and the film layer B to be compounded with the staple fiber nonwoven fabric layer C may be attached to the staple fiber nonwoven fabric layer C. When a heat adhesive fiber is mixed in the staple fiber nonwoven fabric layer C, it is more preferred to make the surface having a better adhesive property to the melting components of the heat adhesive fiber to be contacted.

In order to improve heat insulating property, when a film layer having aluminum vapor-deposited thereonto is used at least for one side, it is preferred that a surface having the vapor-deposited aluminum thereonto faces to a direction opposite to the staple fiber nonwoven fabric layer C. The larger thickness of the heat insulating material can give the higher heat insulating property. Heat insulating property not less than 60% with a thickness of 10 mm is preferred, and not less than 70% with a thickness of 20 mm is especially preferred.

The tensile elongation of the laminated sound absorbing material is preferably not less than 30%, more preferably not less than 50%, and especially preferably not less than 100%. The nonwoven fabric having a tensile elongation not more than 30% is not preferred, and the nonwoven fabric cannot follow the deformation in molding to destroy the superfine fiber layer etc. , leading to large drop in sound absorption coefficient. In addition, in processing, ability of deformation allows easy avoidance of problems, such as cutting caused by poor control of stress. Molding temperatures of the processing may be around 200 degrees C from room temperatures, and the molding temperature will hardly cause problems if the requirements of the present invention are satisfied. Since the elongation percentage of the nonwoven fabric having a compression bonded portion becomes smaller in the constituent of the sound absorbing material of the present invention, it is preferred to set the elongation percentage of this nonwoven fabric as a simple substance to not less 30%.

One of preferable embodiments is compounded use with textiles having sensuousness by coloring and print of patterns onto the surface of the sound absorbing and heat insulating material of the present invention. Such methods enable visual harmonization avoiding sense of incongruity with the environments as the sound absorbing material for building construction, or the sound absorbing material used for automobile interior materials.

The nonwoven fabric A and the staple fiber nonwoven fabric B are preferably of fire-resistant types. It is preferred to use methods of application of flame resistant agents of phosphorus compounds without halogen, or copolymerization with fire-resistant components. Even if other components have a little flammable character, if the nonwoven fabric A layer forming a surface has high fire retardancy, the fire retardancy of the whole compounded material will improve.

### EXAMPLE

Detailed descriptions of the present invention will, hereinafter, be given with reference to examples and comparative example. Values measured by following methods in evaluation were adopted.

### (Average fiber diameter)

A scanning electron microscope photograph was taken at a suitable magnification for a side of not less than 20 of fibers, and an average value was calculated. When a superfine fiber nonwoven fabric is a nonwoven fabric by the melt blowing method, since the variation in a fiber diameter was large, not less than 100 of fibers were measured for fiber diameters and an average value was calculated.

### (A mass per unit area and pack density)

A nonwoven fabric of 20 cm of each side was taken, and a measured value of the weight was converted per 1 m² to obtain a mass per unit area. The mass per unit area of a nonwoven fabric was divided by a thickness under a load of 20 g/cm² to obtain a value, and the value obtained was converted into a unit of g/cm³ to give a pack density.

### (Tensile elongation)

A nonwoven fabric was cut into a rectangle with 20 cm width and 5 cm length. A tensile elongation in low-speed measuring was obtained under the conditions of room temperature of 25 degrees C, sample length 10 cm, and crosshead 10 cm/minute.

### (Sound absorption coefficient)

Normal incident sound absorption coefficient was obtained according to JIS A-1405.

### (Frazier gas permeability)

Measurement was performed according to JIS L-1096-6.27.1 (A method).

### (Heat insulating property)

Measurement was performed according to ASTM D-1518D.

### (Example 1)

A polypropylene resin (approximately 170 degrees C of melting point) was extruded on a spun bond nonwoven fabric made of polyester having an average fiber diameter of 14 microns, and a mass per unit area of 30 g/m² (Ecule 6301A by Toyo Boseki Kabushiki Kaisha), and laminated thereon, forming a 20-micron film layer. Overlaid was a thermal bond staple fiber nonwoven fabric made of polyethylene terephthalate having a mass per unit area of 200 g/m², and a thickness of 10 mm, and including a 30 percentage by weight of thermal adhesive fiber, the thermal bond staple fiber nonwoven fabric including a staple fiber with a 14 microns of average fiber diameter, 51 mm of a fiber length, and a number of crimp 12 time/inch. Compound processing was carried out by the needle punching method on condition of needle of count 40, and a penetration density 50 times/cm², and a needle depth of 10 mm. Subsequently, the material obtained was integrated by heat adhesion at a temperature 30 degrees higher than an adhesive temperature of the fiber. Frazier gas permeability gave 6 cm³/cm²second. Figure 1 illustrates a sound absorption coefficient. A peak frequency gave a sound absorption coefficient of 92% at 2000 Hz, and the sound absorption coefficients (1000 Hz and 4000 Hz) gave 37% and 71%, respectively. The thermal insulation rate gave an excellent value of 72%.

### (Example 2)

Except for having changed the film into a 50-micron film made of polyethylene terephthalate (approximately 263 degrees C of melting point) with aluminum vapor deposited thereon and for having compounded by a needle punching method in Example 1, a sound absorbing and heat insulating material was manufactured in a same manner. Frazier gas permeability gave 6 cm³/cm²second. A peak frequency gave a sound absorption coefficient of 91% at 2000 Hz, and the sound absorption coefficients (1000 Hz and 4000 Hz) gave 39% and 68%, respectively. The thermal insulation rate gave an excellent value of 83%.

### (Comparative example 1)

Except for having extruded a film, having a thickness of 30 microns, made of a low density polyethylene with a melting point of approximately 110 degrees C for lamination, a sound absorbing and heat insulating material was manufactured in a same manner as in Example 1. Needle breakages occurred frequently in a processing step made production impossible.

### (Comparative example 2)

In a manufacturing process of a melt blowing nonwoven fabric, a sound absorbing and heat insulating material having a thickness of 10 mm and a mass per unit area of 200 g/m² was manufactured so as to give 15% of a weight fraction for a polyester staple fiber with 58 mm, using a co-form method. A peak frequency did not exist between 315 and 5000 Hz. The sound absorption coefficients (1000 Hz, 2000 Hz, and 4000 Hz) gave 23, 52 and 91%, respectively. The thermal insulation rate gave a poor value of 52%.

### INDUSTRIAL APPLICABILITY

The present invention provides a sound absorbing material having a smaller thickness, a light weight, and outstanding sound absorbing property and heat insulating property even in a lower frequency region. The sound absorbing material concerned may be useful for improvement in fuel consumption and comfortableness improvement of products, and may be usable for broad usages, such as automobiles and air conditioning instruments, greatly contributing to industrial fields.

## Claims

1. A sound absorbing and heat insulating material having at least one peak of a normal incident sound absorption coefficient in a range of 315 to 5000 Hz, a peak absorption coefficient not less than 80%, and a thickness of 5 to 30 mm.

2. A sound absorbing and heat insulating material, wherein a layer obtained by laminating a porous film layer B including a resin having a melting point not less than 120 degrees C to a nonwoven fabric A having a fiber with not less than 1 micron and not more than 25 microns of a fiber diameter, as a principal component, and a mass per unit area of 10 to 70 g/m²; and a staple fiber nonwoven fabric C having a fiber diameter of 7 to 50 microns, a mass per unit area of 50 to 2000 g/m², and a thickness of 4 to 30 mm; are integrated by compounding by a plurality of through-passing fibers.

3. The sound absorbing and heat insulating material according to Claim 1 or Claim 2, wherein Frazier gas permeability is between 0.05 and 100cm³/cm²second.

4. The sound absorbing and heat insulating material according to any one of Claim 2 or Claim 3, wherein the nonwoven fabric A and the film layer B are compounded by an extrusion laminating method, and further integrated by compounding with the staple fiber nonwoven fabric C layer by a needle punch method.

5. The sound absorbing and heat insulating material according to Claim 4, wherein 5 to 200 numbers/cm² of loops having a height not less than 0.3 mm exist at least on one side of the film layer B by compounding using the needle punch method.

6. The sound absorbing and heat insulating material according to Claim 2 to Claim 5, wherein the film layer B is constituted by a copolymer including polypropylene or any one of polypropylene, polyethylene, and polyoctene, and the film layer B has a thickness of 10 to 50 microns.

7. The sound absorbing and heat insulating material according to any one of Claim 2 to Claim 6, wherein aluminum is vapor-deposited on at least one side of the film layer.
